# FASCICULE DE BREVET EUROPEEN

(11) **EP 2 897 843 B1**
(45) Date de publication et mention de la délivrance du brevet: **12.07.2017**
(21) Numéro de dépôt: 13779282.6
(22) Date de dépôt: 20.09.2013
(51) Int. Cl.: B60W 20/13, B60K 6/48, B60W 20/00

(54) **PILOTAGE DU MODE DE TRACTION D'UN VEHICULE HYBRIDE**
STEUERUNG DES FAHRMODUS EINES HYBRIDFAHRZEUGS
CONTROL OF THE DRIVE MODE OF A HYBRID VEHICLE

(30) Priorité: 24.09.2012 FR 1258919
(43) Date de publication de la demande: 29.07.2015
(73) Titulaire: Renault S.A.S., 92100 Boulogne-Billancourt (FR)
(72) Inventeur: CASOETTO, Grégoire, F-75015 Paris (FR); ORIGUCHI, Masato, F-78120 Rambouillet (FR)
(86) Numéro de dépôt international: PCT/FR2013/052187
(87) Numéro de publication internationale: WO 2014/044988

(56) Documents cités:
- EP-A1- 2 404 801
- WO-A1-2009/109821
- WO-A2-2010/055378
- US-A1- 2011 166 733

## Description

La présente invention concerne le pilotage du mode de traction d'un véhicule de type hybride.

Un véhicule hybride ou HEV (abréviation anglo-saxonne de Hybrid Electric Vehicle) est un véhicule possédant deux systèmes de traction, l'un sous forme d'un groupe moto-propulseur, ou GMP, thermique classique, l'autre sous forme d'un GMP électrique, muni d'une batterie de stockage d'énergie.

Différents modes de fonctionnement d'un véhicule hybride existent, parmi lesquels on peut citer notamment, dans ceux nécessitant l'utilisation de la batterie :
- un roulage en mode tout électrique, appelé dans la suite mode EV, dans lequel la batterie fournit l'intégralité de l'énergie nécessaire à la traction du véhicule et le GMP thermique est inopérant ;
- Un roulage en mode hybride électrique-thermique, appelé dans la suite mode HEV, dans lequel la batterie fournit de l'énergie au GMP électrique qui lui-même épaule le GMP thermique dans la traction du véhicule.

Le véhicule peut aussi fonctionner en mode tout thermique dans le cas où la batterie est complètement déchargée, ou sur décision du conducteur.

Il est connu, par exemple du document FR 2 921 884, de piloter le mode de traction d'un véhicule HEV selon une loi de pilotage qui dépend du niveau de puissance demandé par le conducteur, et du niveau de charge de la batterie, encore appelé SOC (abréviation anglo-saxonne de State Of Charge).

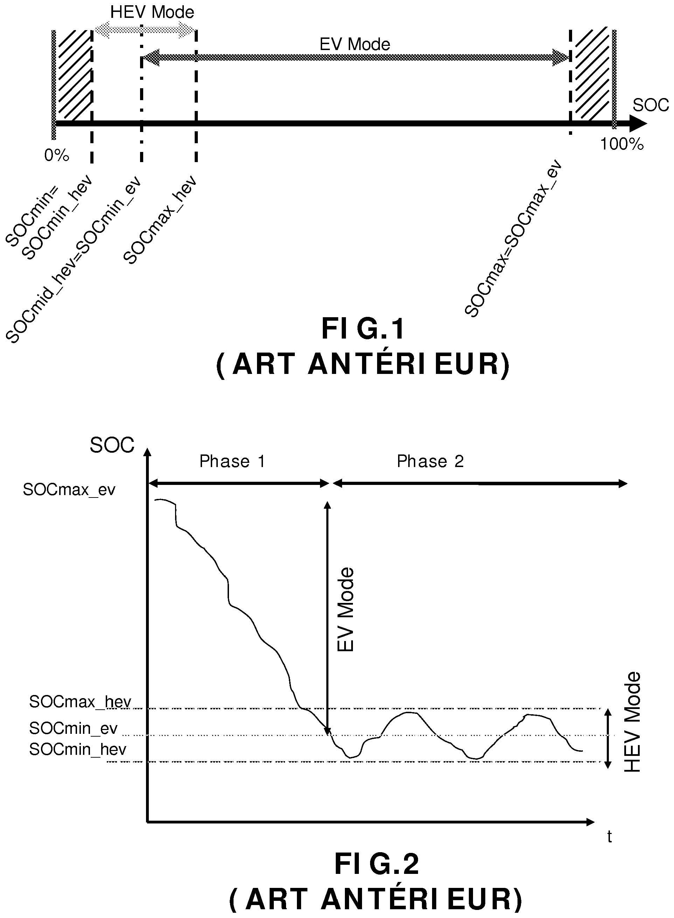

La figure 1 représente les plages de SOC pour lesquelles les fonctionnements en mode HEV et en mode EV sont autorisés, à niveau de puissance fixe demandé par le conducteur: en particulier, les SOC minimum et maximum entre lesquels la batterie évolue en mode HEV sont notés respectivement SOC_{min_hev} et SOC_{max_hev}. Ces SOC seuils sont généralement positionnés dans une zone proche de la limite basse de fonctionnement de la batterie, notée SOCₘᵢₙ. Par ailleurs, les SOC minimum et maximum entre lesquels la batterie évolue en mode EV sont notés respectivement SOC_{min_ev} et SOC_{max_ev}. Sur l'exemple de la figure 1, le seuil minimum SOC_{min_ev} correspond sensiblement au milieu de la plage SOC associée au mode HEV, tandis que le seuil maximum SOC_{max_ev} correspond à la limite haute de fonctionnement de la batterie, notée SOCₘₐₓ. Il convient de noter sur la figure 1 que les deux zones hachurées correspondent quant à elles à des plages de SOC non utilisées, correspondant à des marges de sécurité.

L'utilisation classique d'un véhicule HEV se déroule en deux phases, représentées schématiquement sur la figure 2 qui illustre un exemple d'évolution de l'état de charge ou SOC de la batterie au cours du temps :
- Lors de la phase 1, le conducteur roule en mode EV, ce qui a pour effet de décharger la batterie jusqu'à ce que l'état de charge de la batterie atteigne le seuil minimum SOC_{min_ev} autorisé pour le mode EV.
- une fois ce seuil franchi, la batterie ne possède plus assez d'énergie pour permettre un roulage en mode EV mais peut passer en mode HEV. Pendant la phase 2 correspondant au roulage en mode HEV, la batterie peut récupérer alors de l'énergie lors des phases de freinage. La batterie subit ainsi des séries de charges et de décharges de sorte que le SOC varie entre le seuil minimum SOC_{min_hev} et le seuil maximum SOC_{max_hev} autorisés pour le mode HEV.

Dans les procédés de pilotage du mode de traction connus, tels que celui décrit dans le document FR2921884, les seuils minimum et maximum de SOC sont prédéterminés et fixes. Le document EP 2 404 801 A1 décrit un procédé de pilotage correspondant au préambule de la revendication 1. Un inconvénient de cette solution est que l'énergie disponible dans la batterie, et *a fortiori,* entre les seuils maximum et minimum de SOC, diminue avec le vieillissement de la batterie. Il en résulte que le véhicule passe plus rapidement en mode thermique pur.

La présente invention a pour but de pallier les inconvénients précédents en proposant une solution permettant d'optimiser le vieillissement de la batterie, et ce faisant, d'étendre la durée de vie d'un véhicule hybride.

Pour ce faire, la présente invention a pour objet un procédé de pilotage du mode de traction d'un véhicule hybride équipé d'un groupe motopropulseur thermique et d'un groupe motopropulseur électrique comportant une batterie de traction, dans lequel le véhicule passe :
- d'un mode électrique pur à un mode hybride électrique-thermique lorsque l'état de charge de la batterie de traction passe en-dessous d'un seuil minimum en mode électrique pur,
- du mode hybride électrique-thermique au mode électrique pur lorsque l'état de charge de la batterie de traction repasse au-dessus d'un seuil maximum en mode hybride, et
- du mode hybride électrique-thermique à un mode thermique pur lorsque l'état de charge de la batterie de traction passe au-dessous d'un seuil minimum en mode hybride,
le procédé étant caractérisé en ce que :
- le seuil minimum en mode électrique pur est variable, et/ou
- le seuil minimum et/ou le seuil maximum en mode hybride sont variables.

Selon d'autres caractéristiques possibles de l'invention :
- le procédé comporte une étape de mesure des variations de l'état de santé de la batterie de traction, et le seuil minimum en mode hybride est diminué automatiquement et/ou le seuil maximum en mode hybride est augmenté automatiquement lorsque l'état de santé diminue, de sorte à conserver une énergie disponible en mode hybride sensiblement constante;
- le seuil minimum en mode électrique pur est augmenté sur réception d'une commande activée manuellement par le conducteur du véhicule; le seuil minimum en mode électrique pur est diminué sur désactivation de ladite commande;
- le seuil minimum en mode hybride et le seuil maximum en mode hybride sont simultanément diminués.

L'invention a également pour objet un système de pilotage du mode de traction d'un véhicule hybride équipé d'un groupe motopropulseur thermique et d'un groupe motopropulseur électrique comportant une batterie de traction, le système comportant un calculateur central apte à commander le passage du véhicule:
- d'un mode électrique pur à un mode hybride électrique-thermique lorsque l'état de charge de la batterie de traction passe en-dessous d'un seuil minimum en mode électrique pur,
- du mode hybride électrique-thermique au mode électrique pur lorsque l'état de charge de la batterie de traction repasse au-dessus d'un seuil maximum en mode hybride, et
- du mode hybride électrique-thermique à un mode thermique pur lorsque l'état de charge de la batterie de traction passe au-dessous d'un seuil minimum en mode hybride,
le système étant caractérisé en ce qu'il comporte des moyens aptes à faire varier le seuil minimum en mode électrique pur, et/ou le seuil minimum et/ou le seuil maximum en mode hybride.

Lesdits moyens comportent de préférence un calculateur intégré à la batterie de traction échangeant des données avec le calculateur central.

Les caractéristiques et avantages de la présente invention apparaîtront à la lecture de la description suivante, faite en référence aux figures annexées, dans lesquelles :
- la figure 1, déjà décrite, représente un exemple de définition des plages de SOC autorisées pour le mode électrique pur (Mode EV) et pour le mode hybride (Mode HEV);
- la figure 2, déjà décrite, est un exemple d'évolution temporelle du SOC en roulage, lors d'une utilisation classique d'un véhicule hybride;
- la figure 3 illustre de façon schématique un véhicule hybride équipé d'un système de pilotage de son mode de traction selon l'invention.

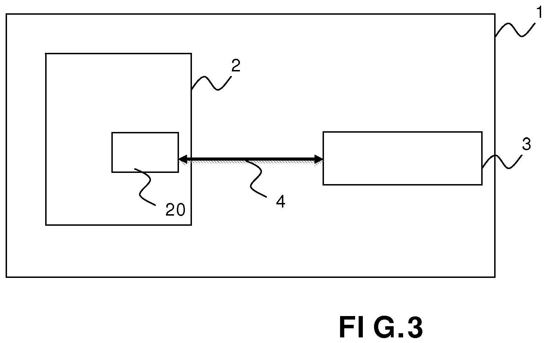

En référence à la figure 3, un véhicule PHEV 1 est équipé classiquement, comme on l'a vu précédemment, d'un GMT thermique (non représenté) et d'un GMT électrique, dont seule la batterie 2 de stockage d'énergie a été représentée. Le véhicule 1 comporte en outre un calculateur 3 central dont le rôle est de décider du mode de traction qu'il convient d'utiliser parmi le mode thermique pur, le mode électrique pur et le mode hybride électrique-thermique. Un calculateur 20 en charge de la gestion de la batterie, de préférence intégré à la batterie 2, communique avec le calculateur 3 central, par exemple par l'intermédiaire d'un bus CAN 4. Le calculateur 20 délivre notamment en temps réel des mesures de l'état de charge SOC de la batterie de sorte que le calculateur 3 central peut décider du meilleur mode de traction en fonction des demandes en puissance du conducteur et du SOC.

Conformément à l'invention, il est prévu de rendre variable dans le temps pendant le roulage :
- la plage de SOC autorisée pour le mode HEV en modifiant le seuil minimum SOC_{min_hev} et/ou le seuil maximum SOC_{max_hev}, et/ou
- le seuil minimum SOC_{min_ev} autorisé pour le mode EV.

Les variations des seuils s'effectuent de préférence au niveau du calculateur 20.

Les stratégies de variations possibles dépendent des avantages recherchés :
Par exemple, sur le long terme, comme on sait que l'énergie disponible dans la batterie et a fortiori, l'énergie disponible en mode HEV, diminue, on va avantageusement limiter de manière artificielle le vieillissement de la batterie en choisissant d'augmenter la plage de fonctionnement en SOC en mode HEV afin de conserver l'énergie disponible entre SOC_{min_hev} et SOC_{max_hev} sensiblement constante et égale à l'énergie initialement allouée au mode HEV lorsque la batterie est neuve. Pour ce faire, le calculateur 20 de gestion de la batterie 2 a la possibilité d'augmenter le seuil maximum SOC_{max_hev} et/ou de diminuer le seuil minimum SOC_{min_hev} autorisés pour le mode HEV. La décision d'appliquer une variation de la plage de fonctionnement en SOC du mode HEV peut se faire en fonction des variations de l'état de santé ou SOH (initiales anglo-saxonnes mises pour State Of Health) qui correspond à une mesure de l'énergie restante dans la batterie effectuée classiquement par le calculateur 20. Ainsi, lorsque le SOH diminue, le calculateur 20 augmente automatiquement la plage de fonctionnement en mode hybride.

En outre, comme le vieillissement des batteries dépend fortement des plages de SOC sur lesquelles la batterie est utilisée, la possibilité de moduler les seuils SOC_{min_hev} et SOC_{max_hev} est un moyen de choisir les plages de SOC en mode HEV qui permettront à la batterie de limiter son vieillissement. On peut également envisager d'accélérer la décharge (via des « boosts ») pour éviter de passer trop de temps dans une zone de SOC où le vieillissement est réputé important.

Un autre intérêt de pouvoir moduler la plage de fonctionnement en SOC du mode HEV est de décaler les limites de fonctionnement en mode HEV sans avoir recours au GMP thermique. En effet, comme indiqué précédemment, la batterie subit en mode HEV des séries de charges (phase de freinage) et de décharges. Or, le rendement entre les décharges et les charges est toujours inférieur à 100% et il faut donc régulièrement, dans les solutions de l'art antérieur, que le GMP thermique se mette en route pour compenser la baisse de SOC due à ces rendements inférieurs à 100%. L'invention permet ainsi d'augmenter le rendement énergétique mais également d'optimiser le bilan CO₂ en retardant le démarrage du moteur thermique et éventuellement en privilégiant la recharge à la borne.

Une autre stratégie de pilotage rendue possible par l'invention a pour but de donner plus de flexibilité au conducteur :
A titre d'exemple, lorsque le conducteur du véhicule hybride est à l'approche d'une ville où seuls les véhicules à émission de CO₂ nulle ou limitée sont tolérés, il est utile de permettre au conducteur de différer le passage en mode EV en prolongeant le fonctionnement en mode HEV, de sorte que le véhicule atteigne la ville avec une capacité non négligeable d'utilisation de son véhicule en mode EV. Cela est rendu possible grâce à l'invention en prévoyant d'augmenter la valeur du seuil minimum SOC_{min_ev} en mode EV sur réception d'une commande activée manuellement par le conducteur, typiquement un bouton prévu à cet effet sur le tableau de bord. En pratique, cela a pour effet d'écourter la phase 1 représentée sur la figure 2. Le calculateur 3 central détecte alors plus rapidement le dépassement en-deçà de la valeur du seuil minimum SOC_{min_ev} en mode EV et commande par suite le passage en mode HEV. Le conducteur économise ainsi l'énergie disponible dans sa batterie pour plus tard. Une fois arrivé dans la ville, une désactivation de la commande, par exemple par appui sur le même bouton, indique au calculateur 20 que le seuil minimum SOC_{min_ev} en mode EV peut être à nouveau diminué, et de préférence replacé à sa valeur initiale. Le calculateur central 3 détecte à nouveau ce changement et peut autoriser le passage en mode EV.

Une autre stratégie rendue possible grâce à l'invention consiste à éviter les zones d'état de charge réputées pour favoriser significativement le vieillissement de la batterie : A titre d'exemple il n'est pas souhaitable d'autoriser un passage en mode HEV commandé par le conducteur pour plus de confort, lorsque la batterie est complètement chargée. En effet, dans ce cas, la batterie va effectuer de nombreux petits cycles autour de la valeur SOC de 100%, ce qui est très dégradant pour la batterie, notamment lors des phases de freinage où pendant un temps donné, le SOC peut monter au-delà de 100%. Le calculateur 20 peut décider, conformément à l'invention, de diminuer simultanément les seuils maximum SOC_{max_hev} et minimum SOC_{min_hev} autorisés pour le mode HEV de manière à s'éloigner de cette zone de vieillissement. Le calculateur 3 détecte ce changement de seuil, et commande par suite un changement du régime de traction, soit en EV, soit en thermique pur. Ceci a pour effet d'accélérer la chute du SOC en dehors des zones de fort vieillissement.

## Revendications

1. Procédé de pilotage du mode de traction d'un véhicule hybride (1) équipé d'un groupe motopropulseur thermique et d'un groupe motopropulseur électrique comportant une batterie (2) de traction, dans lequel le véhicule passe :
- d'un mode électrique pur à un mode hybride électrique-thermique lorsque l'état de charge de la batterie de traction passe en-dessous d'un seuil minimum (SOC_{min_ev}) en mode électrique pur,
- du mode hybride électrique-thermique au mode électrique pur lorsque l'état de charge de la batterie de traction repasse au-dessus d'un seuil maximum (SOC_{max_hev}) en mode hybride, et
- du mode hybride électrique-thermique à un mode thermique pur lorsque l'état de charge de la batterie de traction passe au-dessous d'un seuil minimum (SOC_{min_hev}) en mode hybride,
le procédé incluant que :
- le seuil minimum (SOC_{min_ev}) en mode électrique pur est variable, et/ou
- le seuil minimum (SOC_{min_hev}) et/ou le seuil maximum (SOC_{max_hev}) en mode hybride sont variables,
le procédé étant **caractérisé en ce que** le seuil minimum en mode hybride et le seuil maximum en mode hybride sont simultanément diminués.

2. Procédé selon la revendication 1, **caractérisé en ce qu'**il comporte une étape de mesure des variations de l'état de santé de la batterie (2) de traction, et **en ce que** le seuil minimum (SOC_{min_hev}) en mode hybride est diminué automatiquement et/ou le seuil maximum (SOC_{max_hev}) en mode hybride est augmenté automatiquement lorsque l'état de santé diminue, de sorte à conserver une énergie disponible en mode hybride sensiblement constante.

3. Procédé selon l'une quelconque des revendications précédentes, **caractérisé en ce que** le seuil minimum (SOC_{min_ev}) en mode électrique pur est augmenté sur réception d'une commande activée manuellement par le conducteur du véhicule.

4. Procédé selon la revendication 3, **caractérisé en ce que** le seuil minimum (SOC_{min_ev}) en mode électrique pur est diminué sur désactivation de ladite commande.

5. Système de pilotage du mode de traction d'un véhicule hybride (1) équipé d'un groupe motopropulseur thermique et d'un groupe motopropulseur électrique comportant une batterie (2) de traction, le système comportant un calculateur (3) central apte à commander le passage du véhicule :
- d'un mode électrique pur à un mode hybride électrique-thermique lorsque l'état de charge de la batterie de traction passe en-dessous d'un seuil minimum (SOC_{min_ev}) en mode électrique pur,
- du mode hybride électrique-thermique au mode électrique pur lorsque l'état de charge de la batterie de traction repasse au-dessus d'un seuil maximum (SOC_{max_hev}) en mode hybride, et
- du mode hybride électrique-thermique à un mode thermique pur lorsque l'état de charge de la batterie de traction passe au-dessous d'un seuil minimum (SOC_{min_hev}) en mode hybride,
le système étant **caractérisé en ce qu'**il comporte des moyens (20) aptes à faire varier le seuil minimum (SOC_{min_ev}) en mode électrique pur, et/ou le seuil minimum (SOC_{min_hev}) et/ou le seuil maximum (SOC_{max_hev}) en mode hybride, le seuil minimum en mode hybride et le seuil maximum en mode hybride étant simultanément diminués.

6. Système selon la revendication 5, **caractérisé en ce que** lesdits moyens (20) comportent un calculateur intégré à la batterie (2) de traction échangeant des données avec le calculateur central.

## Patentansprüche

1. Verfahren zur Steuerung des Fahrmodus eines Hybridfahrzeugs (1), das mit einer thermischen Antriebsgruppe und einer elektrischen Antriebsgruppe, umfassend eine Fahrzeugbatterie (2), ausgestattet ist, wobei das Fahrzeug übergeht:
- von einem rein elektrischen Modus zu einem elektrisch-thermischen Hybridmodus, wenn der Ladungszustand der Fahrzeugbatterie unter eine minimale Schwelle (SOC_{min_ev}) im rein elektrischen Modus fällt,
- vom elektrisch-thermischen Hybridmodus zum rein elektrischen Modus, wenn der Ladungszustand der Fahrzeugbatterie wieder über eine maximale Schwelle (SOC_{max_hev}) im Hybridmodus steigt, und
- vom elektrisch-thermischen Hybridmodus zu einem rein thermischen Modus, wenn der Ladungszustand der Fahrzeugbatterie unter eine minimale Schwelle (SOC_{min_hev}) im Hybridmodus fällt,
wobei das Verfahren umfasst, dass:
- die minimale Schwelle (SOC_{min_ev}) im rein elektrischen Modus variabel ist, und/oder
- die minimale Schwelle (SOC_{min_hev}) und/oder die maximale Schwelle (SOC_{max_hev}) im Hybridmodus variabel sind,
wobei das Verfahren **dadurch gekennzeichnet ist, dass** die minimale Schwelle im Hybridmodus und die maximale Schwelle im Hybridmodus gleichzeitig gesenkt werden.

2. Verfahren nach Anspruch 1, **dadurch gekennzeichnet, dass** dieses einen Schritt der Messung von Variationen des Gesundheitszustands der Fahrzeugbatterie (2) umfasst, und dadurch, dass die minimale Schwelle (SOC_{min_hev}) im Hybridmodus automatisch gesenkt wird und/oder die maximale Schwelle (SOC_{max_hev}) im Hybridmodus automatisch erhöht wird, wenn der Gesundheitszustand abnimmt, um eine im Hybridmodus verfügbare Energie im Wesentlichen konstant zu halten.

3. Verfahren nach einem der vorhergehenden Ansprüche, **dadurch gekennzeichnet, dass** die minimale Schwelle (SOC_{min_ev}) im rein elektrischen Modus beim Empfang eines Befehls erhöht wird, der manuell vom Lenker des Fahrzeugs aktiviert wird.

4. Verfahren nach Anspruch 3, **dadurch gekennzeichnet, dass** die minimale Schwelle (SOC_{min_ev}) im rein elektrischen Modus bei der Deaktivierung des Befehls gesenkt wird.

5. System zur Steuerung des Fahrmodus eines Hybridfahrzeugs (1), das mit einer thermischen Antriebsgruppe und einer elektrischen Antriebsgruppe, umfassend eine Fahrzeugbatterie (2), ausgestattet ist, wobei das System einen Zentralrechner (3) umfasst, der geeignet ist, den Übergang des Fahrzeugs zu steuern:
- von einem rein elektrischen Modus zu einem elektrisch-thermischen Hybridmodus, wenn der Ladungszustand der Fahrzeugbatterie unter eine minimale Schwelle (SOC_{min_ev}) im rein elektrischen Modus fällt,
- vom elektrisch-thermischen Hybridmodus zum rein elektrischen Modus, wenn der Ladungszustand der Fahrzeugbatterie wieder über eine maximale Schwelle (SOC_{max_hev}) im Hybridmodus steigt, und
- vom elektrisch-thermischen Hybridmodus zu einem rein thermischen Modus, wenn der Ladungszustand der Fahrzeugbatterie unter eine minimale Schwelle (SOC_{min_hev}) im Hybridmodus fällt,
wobei das System **dadurch gekennzeichnet ist, dass** dieses Mittel (20) umfasst, die geeignet sind, die minimale Schwelle (SOCₘᵢₙ_ₑᵥ) im rein elektrischen Modus und/oder die minimale Schwelle (SOC_{min_hev}) und/oder die maximale Schwelle (SOC_{max_hev}) im Hybridmodus variieren zu lassen, wobei die minimale Schwelle im Hybridmodus und die maximale Schwelle im Hybridmodus gleichzeitig gesenkt werden.

6. System nach Anspruch 5, **dadurch gekennzeichnet, dass** die Mittel (20) einen in der Fahrzeugbatterie (2) integrierten Rechner umfassen, der Daten mit dem Zentralrechner austauscht.

## Claims

1. Method for controlling the drive mode of a hybrid vehicle (1) equipped with a thermal power train and with an electrical power train comprising a traction battery (2), in which the vehicle passes:
- from a pure electrical mode to an electrical-thermal hybrid mode when the state of charge of the traction battery passes below a minimum threshold (SOC_{min_ev}) in pure electrical mode,
- from the electrical-thermal hybrid mode to the pure electrical mode when the state of charge of the traction battery passes back above a maximum threshold (SOC_{max_hev}) in hybrid mode, and
- from the electrical-thermal hybrid mode to a pure thermal mode when the state of charge of the traction battery passes below a minimum threshold (SOC_{min_hev}) in hybrid mode,
the method including that:
- the minimum threshold (SOC_{min_ev}) in pure electrical mode is variable, and/or
- the minimum threshold (SOC_{min_hev}) and/or the maximum threshold (SOC_{max_hev}) in hybrid mode are variable,
the method being **characterized in that** the minimum threshold in hybrid mode and the maximum threshold in hybrid mode are decreased simultaneously.

2. Method according to Claim 1, **characterized in that** it comprises a step of measuring the variations of the state of health of the traction battery (2), and **in that** the minimum threshold (SOC_{min_hev}) in hybrid mode is decreased automatically and/or the maximum threshold (SOC_{max_hev}) in hybrid mode is increased automatically when the state of health decreases, so as to preserve a substantially constant available energy in hybrid mode.

3. Method according to any one of the preceding claims, **characterized in that** the minimum threshold (SOC_{min_ev}) in pure electrical mode is increased on receipt of a command activated manually by the driver of the vehicle.

4. Method according to Claim 3, **characterized in that** the minimum threshold (SOC_{min_ev}) in pure electrical mode is decreased on deactivation of the said command.

5. System for controlling the drive mode of a hybrid vehicle (1) equipped with a thermal power train and with an electrical power train comprising a traction battery (2), the system comprising a central processor (3) able to command the passage of the vehicle:
- from a pure electrical mode to an electrical-thermal hybrid mode when the state of charge of the traction battery passes below a minimum threshold (SOC_{min_ev}) in pure electrical mode,
- from the electrical-thermal hybrid mode to the pure electrical mode when the state of charge of the traction battery passes back above a maximum threshold (SOC_{max_hev}) in hybrid mode, and
- from the electrical-thermal hybrid mode to a pure thermal mode when the state of charge of the traction battery passes below a minimum threshold (SOC_{min_hev}) in hybrid mode,
the system being **characterized in that** it comprises means (20) able to vary the minimum threshold (SOC_{min_ev}) in pure electrical mode, and/or the minimum threshold (SOC_{min_hev}) and/or the maximum threshold (SOC_{max_hev}) in hybrid mode, the minimum threshold in hybrid mode and the maximum threshold in hybrid mode being decreased simultaneously.

6. System according to Claim 5, **characterized in that** the said means (20) comprise a processor integrated into the traction battery (2) exchanging data with the central processor.
